# EUROPEAN PATENT APPLICATION

(11) **EP 2 713 047 A2**
(43) Date of publication of application: **02.04.2014**
(21) Application number: 13181293.5
(22) Date of filing: 22.08.2013
(51) Int. Cl.: F03D 7/02

(54) **A wind turbine system**

(30) Priority: 28.09.2012 JP 2012215466
(71) Applicant: Hitachi Ltd., Tokyo 100-8280 (JP)
(72) Inventor: Hashimoto, Takashi, Tokyo, 100-8280 (JP); Saeki, Mitsuru, Tokyo, 100-8280 (JP); Yoshida, Shigeo, Tokyo, 100-8280 (JP)
(74) Representative: MERH-IP Matias Erny Reichl Hoffmann

(57) **Abstract**

A wind turbine system includes a tower, a nacelle which is supported on the tower (10), a plurality of blades (40-42) which are rotatably supported to the nacelle (20) via a hub (30), and a generator (22) which generates electricity by rotating the blades (40-42), wherein in case the tower (10) shifts from vertical direction, the wind turbine system is controlled so that a force with an opposite direction to the tower (10) shifting direction is added by wind.

## Description

### BACKGROUND OF THE INVENTION

### FIELD OF THE INVENTION

The present invention relates to a wind turbine system, especially, to a wind turbine which can get back to vertical position in case a tower shifts from vertical position.

### BACKGROUND ART

A windmill is swung by wind or operation of itself. A windmill is established not only by being fastened a base to a ground of off-shore or on-shore but also on a floating body on sea. In case the windmill is established on the floating body, because the windmill is not fastened to the ground, swinging of the windmill becomes larger compared with the case which the base is fastened to the ground, and the impact to output of the windmill or load to the windmill becomes also larger. There is an example of a conventional wind turbine disclosed in Japanese unexamined patent application publication (translation of PCT application) No. 2004-520531.

In the patent literature, a following wind energy plant is disclosed, that is, a wind energy plant with a tower and with, disposed on the tower rotor, with at least one individually adjustable rotor blade, comprising a device for detecting the wind direction and a device for detecting the azimuthal position, characterized by a control of the rotor blade adjustment in dependence on a deviation between the determined wind direction and the detected azimuth position.

However, the patent literature doesn't consider to reduce the tower's shift from vertical direction, but aim for matching wind the direction and the azimuth position.

### SUMMARY OF THE INVENTION

In light of the above problem, an object of the present invention is to provide a wind turbine system which can reduce shift of a tower from vertical direction in the wind turbine.

In order to solve the above problem, the present invention of the wind turbine system comprises a tower, a nacelle which is supported on the tower, a plurality of blades which are rotatably supported to the nacelle via a hub, and/or a generator which generates electricity by rotating the blades. In case the tower shifts from vertical direction, the wind turbine system is controlled so that a load (force) with an opposite direction to the tower shifting direction is added by wind force.

According to the present invention of the wind turbine system, it is possible to reduce shift of a tower from vertical direction in the wind turbine.

### BRIEF DESCRIPTION OF THE DRAWINGS

Fig. 1 shows a cross-sectional view from vertical direction to wind direction in horizontal plane of the wind turbine system in embodiment 1.
Fig. 2 shows a view seen from wind direction of the wind turbine system in embodiment 1.
Fig. 3 shows a top view of the wind turbine system and in normal condition.
Fig. 4 shows a top view of the wind turbine system in embodiment 1 and in case swinging to right against wind direction.
Fig. 5 shows a top view of the wind turbine system in embodiment 1 and in case clockwising yaw moment occurs.
Fig. 6 shows a top view of the wind turbine system in embodiment 1 and in case restoring force or damping force occurs.
Fig. 7 shows a top view of the downwind turbine system in embodiment 1 and in case clockwising yaw moment occurs.
Fig. 8 shows a top view of the wind turbine system in embodiment 2 and in case clockwising yaw moment occurs.
Fig. 9 shows a view of the wind turbine system in embodiment 2 from windward.
Fig. 10 shows the control contents of each blade in accordance with the azimuth angle θ.
Fig. 11 is a representation of the processing performed by the control system 23 according to embodiment 2.
Fig. 12 shows a top view of the wind turbine system in embodiment 3 and in case clockwising yaw moment occurs.

### DESCRIPTION OF EMBODIMENTS

Hereinafter, the appropriate examples to implement the present invention are explained with the drawings. Needless to say, those are just embodiments and therefore it doesn't mean that the present invention limits to the specified embodiments.

### First Embodiment

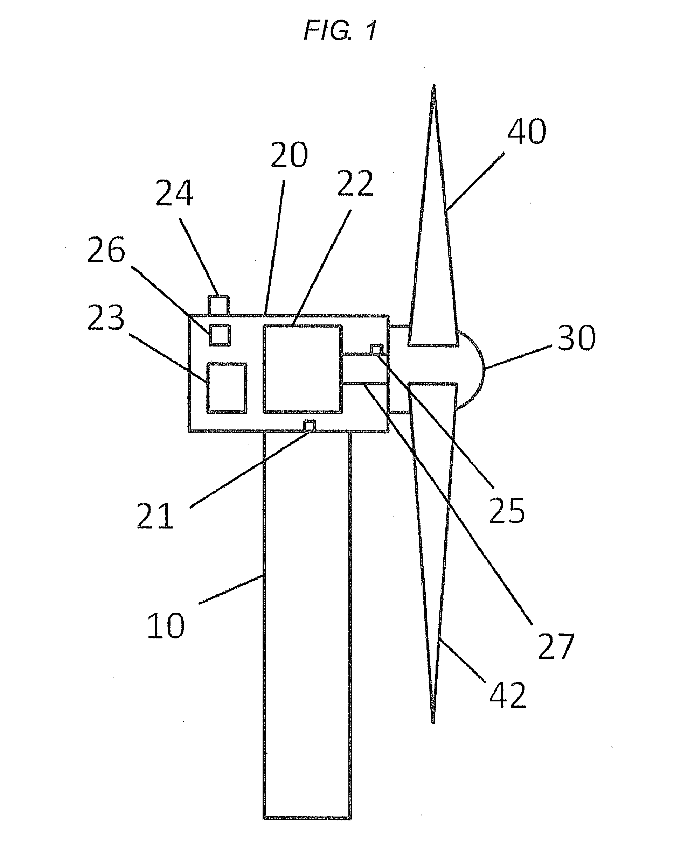

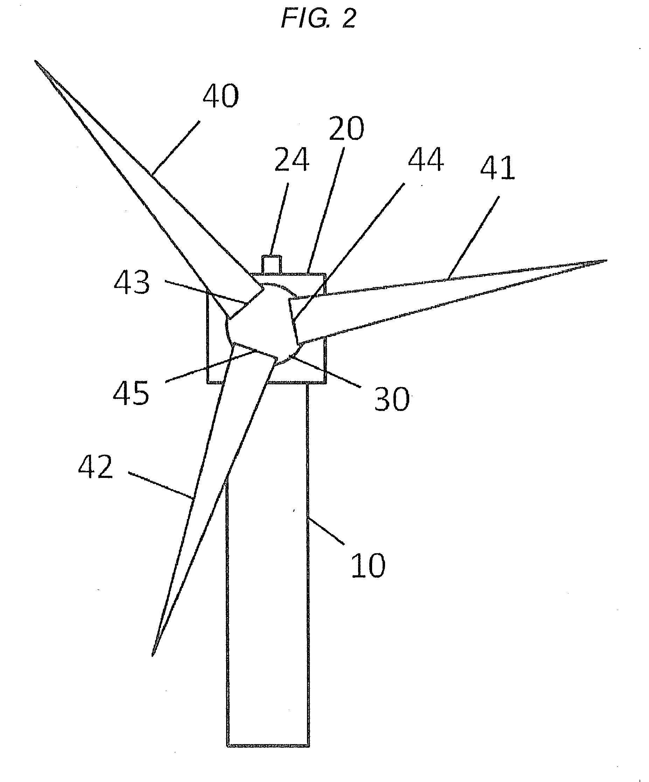

The first embodiment is explained by fig. 1 to fig. 7. As shown in the fig. 1 and fig. 2, a wind turbine system in this embodiment roughly comprises a tower 10, a nacelle 20 which is disposed on the tower 10 and supported by the tower 10, and blades 40-42 which is supported by the nacelle 20 and rotatably supported by the nacelle 20 via a hub 30. The hub 30 rotates with blades 40-42.

In the nacelle 20, a main shaft 27 which is connected to the hub 30 and rotates with the hub 30, and a generator 22 which is connected to the main shaft 27, are provided. In the nacelle 20, further, a yaw motor 21 which controls the rotation angle of the nacelle 20 (azimuthal angle of the nacelle), a control system 23, a roll acceleration sensor 26 which detects the acceleration of rotational direction (rolling direction) with respect to the axis of wind direction and transmits the detected acceleration of rotational direction, an anemoscope 24 which detects the wind direction and transmits the detected wind direction to the control system 23, and an azimuthal angle sensor 25 which detects the rotational angle of the hub 30 with respect to the tower 10 and transmits the detected rotational angle of the hub 30. These rotational angles can be controlled. The angle of each blade to the hub 30 is predetermined, and therefore, it is possible to detect the angle of each blade 40-42 with respect to the tower 10 by detecting the rotational angle of the hub 30 to the tower 10. Incidentally, it is not always necessary for the nacelle 20 to be rotatably supported to the tower 10, and accordingly, it is also not always necessary to provide a yaw motor 21.

In this embodiment, blades 40-42 are rotatably supported to the hub 30, and each of blades has a pitch motor 43-45. By controlling independently each of the pitch motors, the rotational angle of each blade with respect to the hub 30 (pitch angle) is controlled independently with each other. The blades 40-42 are rotated by lift force originated from wind, and the rotating energy is transmitted to the generator 22 via the hub 30 and the main shaft 27. By transmitting the rotating energy to the generator 22, the generator 22 generates electricity. Incidentally, in this embodiment, the rotational speed of the main shaft 27 is directly transmitted to the generator 22, but it is optionally possible to provide a gear for changing the rotational speed between the main shaft 27 and the generator 22. By controlling independently each of the pitch motors 43-45 disposed on each of the blades 40-42 and changing the rotational angle with respect to the hub 30, it becomes possible to adjust the generated electrical power and the load added to blades 40-42. Of course, as a pitch angle adjusting device, it is not limited to the pitch motor, and other types of means are also available.

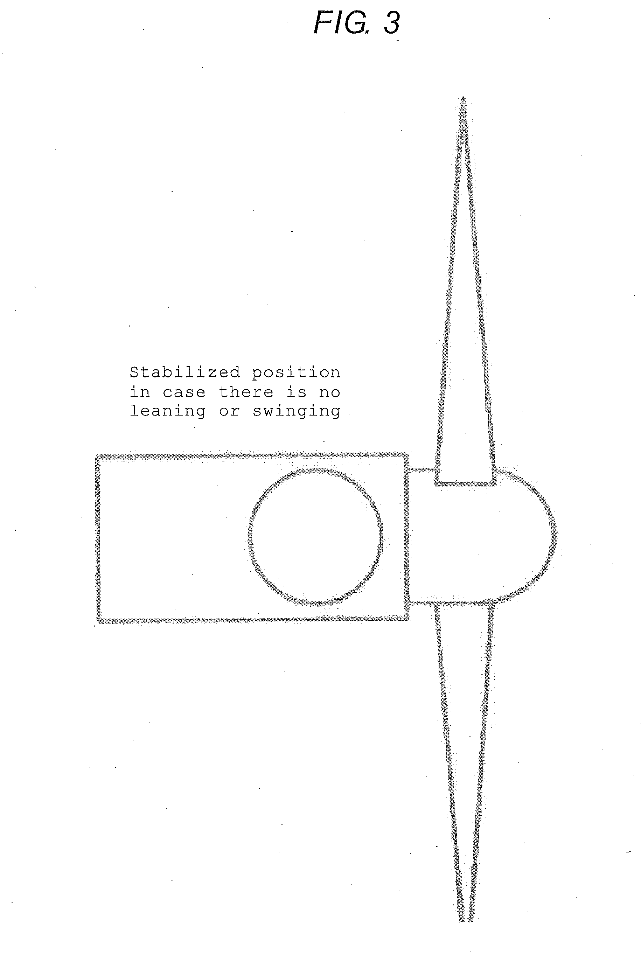

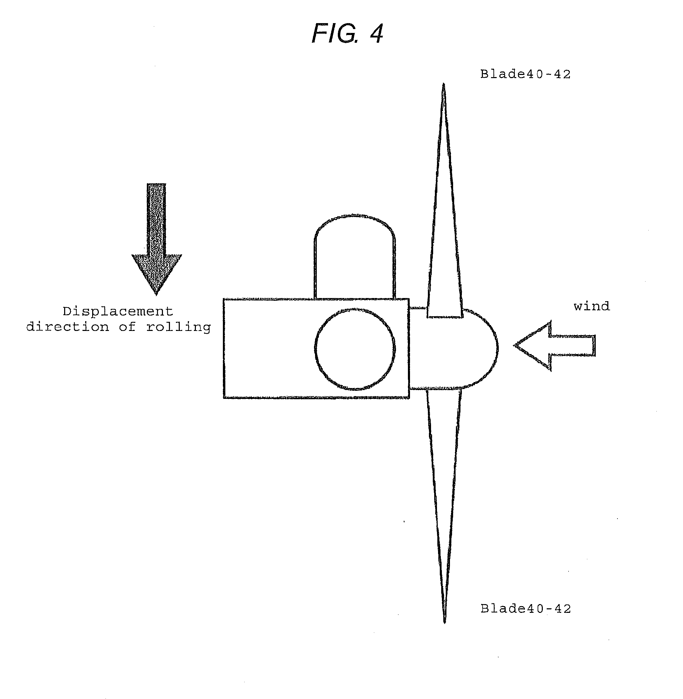

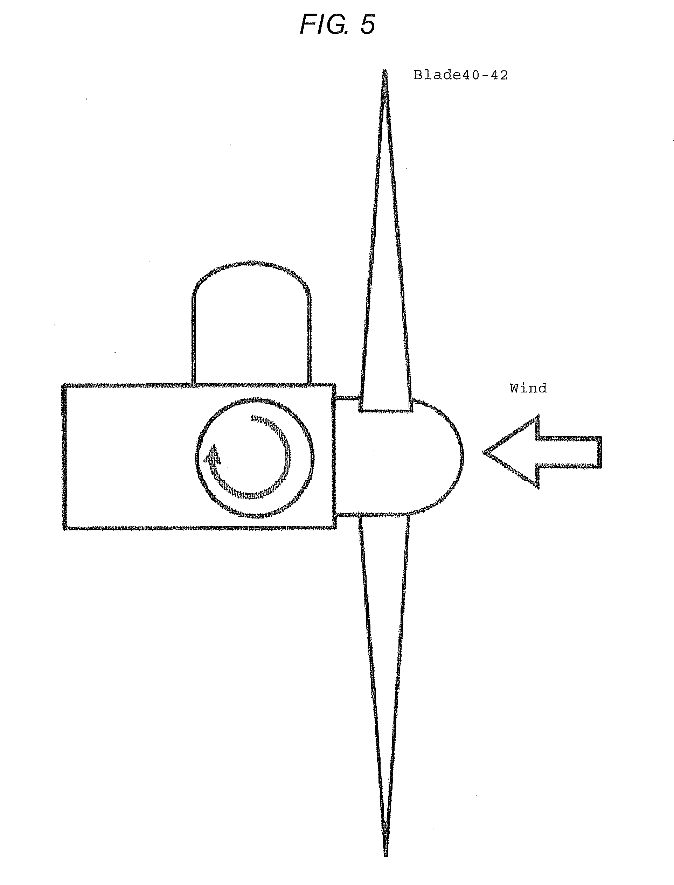

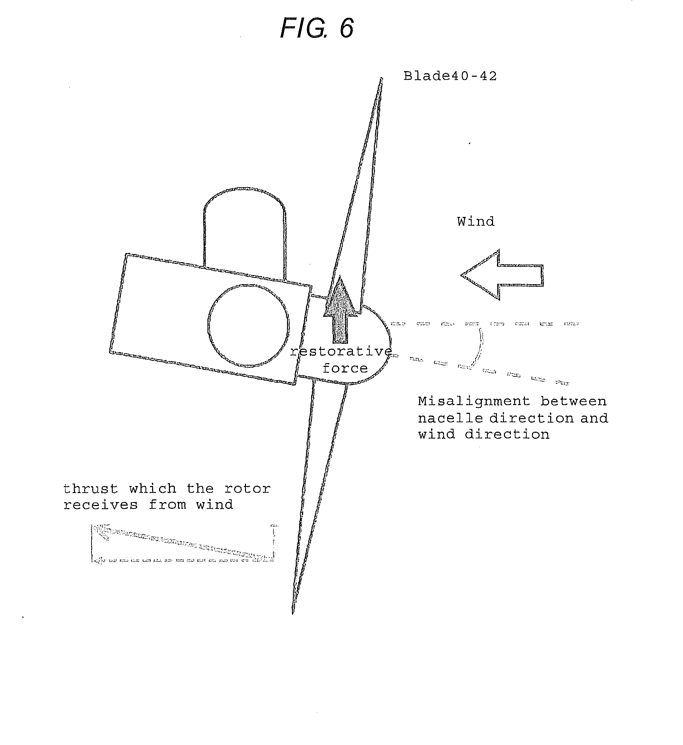

Using fig. 3 to fig. 6, controlling way of the wind turbine system in this embodiment is explained. As an example, an up-wind type wind turbine generating system which generates electricity keeping the blades up-wind position with respect to the tower is explained. Incidentally, to facilitate understanding of the case which the windmill shifts from the vertical direction, fig. 3 shows the case which no shift from vertical direction occurs. As types of the shifts, there are the cases which the tower is kept leaned (without any movement), or the tower is swinging. In fig. 4, the windmill leans to right direction against windward. In this case, as shown in fig. 5, yawing moment is given to rotate the azimuthal angle of the nacelle for moving the blade which positions at tower' s shifted direction to leeward, i.e. in this case, yawing moment is given to rotate the nacelle clockwise seen from the above of the windmill. Specifically, by driving the yaw motor 21, the nacelle 30 is rotated, and the nacelle angle with respect to wind direction is adjusted. As a result, as shown in fig. 6, misalignment is occurred between the yaw direction and the wind direction, and a drag force affected to the blades 40-42 by wind has an opposite directional component from shifting direction of the windmill. That is, through the blades 40-42, a load (force) which has the opposite direction with respect to the leaning direction of the tower 10 is added by wind force, this force can work as restorative force to the original position for the windmill.

In the above, the case which the windmill leans, i.e. the windmill is remained leaned, is only explained, but also in case swinging occurs, i.e. the tower is moving and not static, driving the yaw motor 21 corresponding to the velocity in rolling direction generates damping force for swinging. Incidentally, the velocity in rolling direction can be calculated from the value obtained from the roll acceleration sensor 26. That is, in the above example of leaning (static case), the nacelle 30 is controlled to rotate on the basis of a displacement of the tower, i.e. an amount of move from the vertical position. But in this example of swinging (dynamic case), the nacelle 30 is controlled to rotate on the basis of the roll velocity of the windmill when moving to right direction against windward from the vertical position. In both examples, the rotating directions for the nacelle are the same. Such restorative force or damping force can reduce the shift of the windmill from the vertical position.

Here, the detail of the content in fig. 6 is explained. Blades 40-42 generate thrust perpendicular to the rotating plane of the blades, i.e. the direction from the hub 30 to a connected portion of the nacelle 20 and the tower 10. The thrust generated in the blades is generated due to wind force. By resolving the thrust, it can be divided to two forces, one force is to push the tower 10 to the wind direction, and the other force is a force which works perpendicularly to the wind direction. In the two forces, the force which works perpendicularly to the wind direction can work as restorative force or damping force. So, it is possible to reduce the shift of the windmill from the original position by using these restorative or damping forces.

In this embodiment, it becomes possible to reduce the shift of the windmill by receiving the load with opposite direction from the shifting direction with respect to vertical direction from natural wind, even when the shift of the tower from the vertical position occurs. The load is originated from wind and added to the blades 40-42, and transmitted to the tower 10 via the blades 40-42.

In the above example, the up-wind type wind turbine is explained. In this case, (by driving the yaw motor 21 as a yaw adjusting device and adjusting the angle of the nacelle 20 with respect to the wind direction,) the azimuthal angle of nacelle 20 is controlled for moving the blade which positions at tower' s shifted direction, to leeward, i.e. in case the windmill shifts to right direction against windward, the nacelle is controlled to rotate in clockwise direction (seen from the above of the windmill), and in case the windmill shifts to left direction against windward, the nacelle is controlled to rotate in counter-clockwise direction (seen from the above of the windmill). The yaw adjusting device is not limited to the yaw motor, and other type of means is also available.

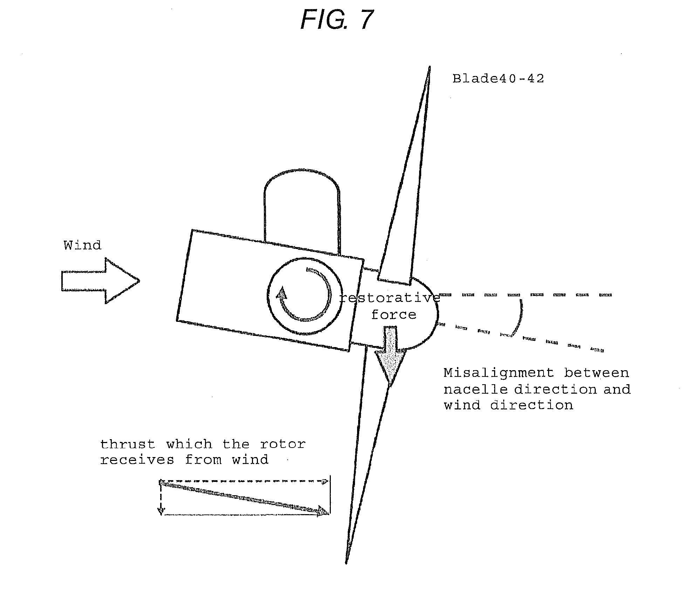

Incidentally, although the up-wind type wind turbine is explained in the above example, a down-wind type wind turbine generating system which generates electricity keeping the blades at leeward position with respect to the tower is also applicable. But in this case, it is necessary to change the rotating direction for the nacelle oppositely. In the fig. 7, the example of the down-wind turbine is shown. The fig. 7 shows a case which the windmill shifts to left direction against windward. In this case, a yawing moment is given to rotate the azimuthal angle of the nacelle and make the blade which positions at tower' s shifted direction move to windward, i.e. a yawing moment to rotate clockwise seen from the above of the windmill in this case. After this control, the same type of restorative force is added to the tower as the case of the up-wind type wind turbine described above.

### Second embodiment

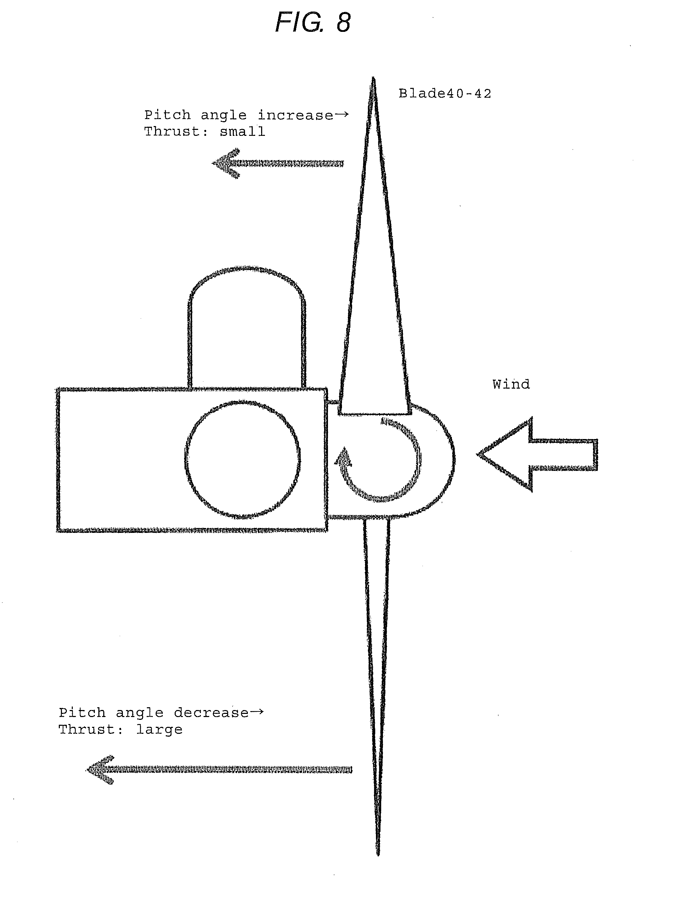

The second embodiment is explained by fig. 8-fig. 11. In the embodiment 1, by the yaw, the shift can be reduced. But in this embodiment, the yawing moment to reduce the shift is obtained by controlling the pitch angle of each blade. Also in this embodiment, an example of up-wind type wind turbine generating system is explained, but of course, the down-wind type wind turbine generating system is not excluded from the invention. Incidentally, the same structure and the same effect with the first embodiment are omitted.

In the fig. 8, in case the windmill shifts to right direction against, the windmill is controlled so that the thrust generated on a blade on the direction which the tower 10 shifts (in the fig. 8, the bottom blade) becomes larger than the thrust generated on a blade on the opposite direction which the tower 10 shifts (in the fig. 8, the upper blade). So, actively the imbalance of thrust on blades by wind force is caused. To control like this, because the thrust generated on the blade on the tower shifting side (direction) is larger, clockwise directional force generates to the nacelle so as to make the blade which positions at tower's shifted side (direction)move to leeward as the fig. 6 in the embodiment 1. Therefore, the restorative force against the shift is generated. Similarly, when swinging of the tower occurs, damping force is generated by control of each blade which corresponds to the velocity in the rolling direction.

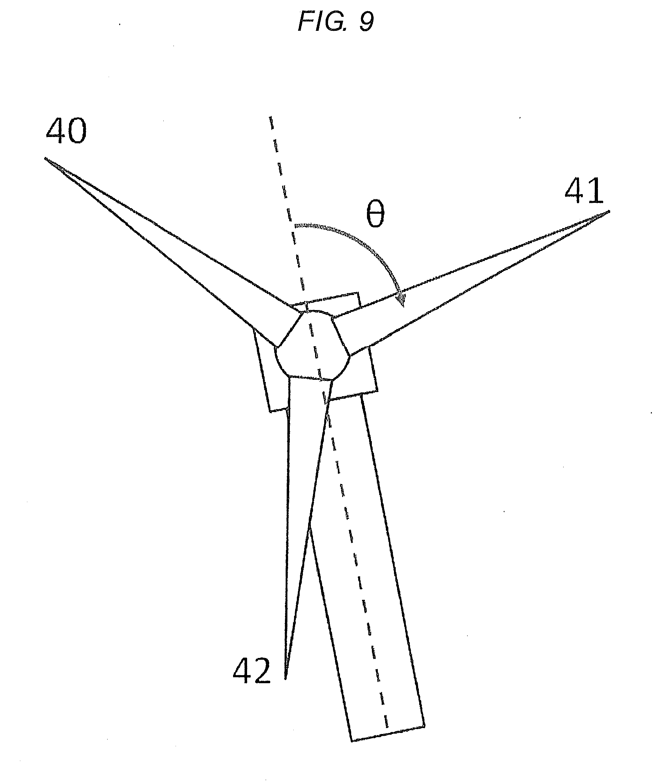

Using fig. 9 to fig. 11, how to control the each blade is explained. Fig. 9 is a view of the wind turbine system in this embodiment seen from windward. As shown in the figure, the azimuthal angle of each blade 40-42 with respect to the long direction in the tower 10 is set as θ.

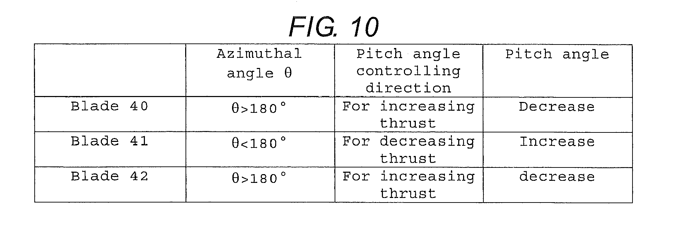

Fig. 10 shows the content of controlling each blade depending on azimuthal angle θ. As shown in the figure, when azimuthal angle θ is smaller than 180°, by increasing the pitch angle, lift force is decreased and the thrust generated by blades are decreased. Meanwhile, when azimuthal angle θ is larger than 180°, by decreasing the pitch angle, lift force is increased and the thrust generated by blades are increased. Incidentally, the above control is the way in case the wind turbine system shifts to left seen from windward. In case the wind turbine system shifts to right seen from windward, the increasing and decreasing tendency explained above is reversed. As a result, imbalance of the thrust generated in each blade generates the yawing moment just as shown in fig. 8.

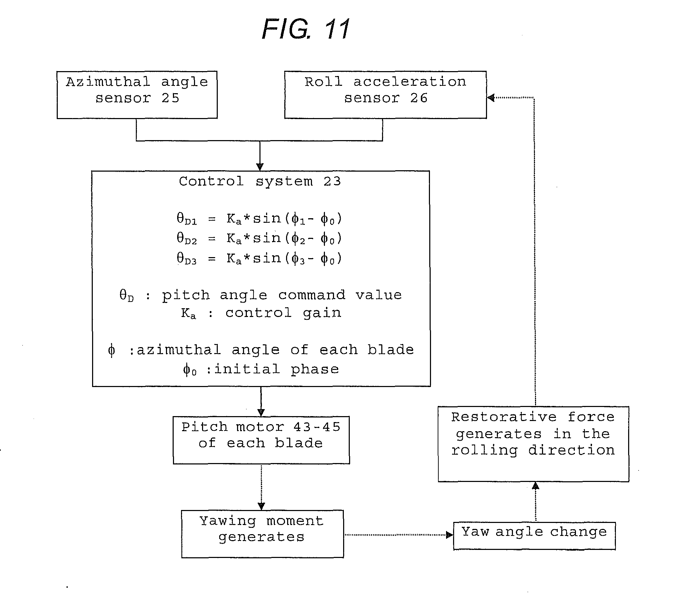

Fig. 11 shows a processing performed in the control system 23 during the above control. The detected value from the roll acceleration sensor 26, which detects the acceleration in rolling direction in the axis of wind direction, is sent to the control system 23, and the magnitude and the direction of the swinging is determined in the control system 23. To the control system 23, not only the detected value from the roll acceleration sensor 26, but the azimuthal angle information detected by the azimuthal angle sensor 25 is also sent. Incidentally, the measuring method of the rolling movement doesn't only depend on the rolling acceleration, but also may depend on the rolling angle or the rolling angular velocity. As other alternatives, lateral acceleration, velocity, or displacement are also available.

In the control system 23, a pitch angle command value θ_{Dn} is calculated by multiplying sine function of azimuthal angle φₙ of each blade (n corresponds to the number of blades, and in this embodiment, n varies 1, 2, 3) by predetermined control gain Kₐ, i.e. θ_{Dn} is calculated in the form of θ_{Dn}= Kₐ*Sin(φₙ-φ₀). Herein, φ₀ is a compensation value of delay of the measurement system, the drive system, as well as aerodynamic and structural system. The pitch angle command value θ_{Dn} is sent to the pitch motors 43-45 of each blade, and the pitch motors 43-45 control the pitch angle of each blade based on the command value θ_{Dn}. Incidentally, in the above, although it is explained by the combination of Kₐ, φₙ, φ₀, it may omit φ₀ and adjust the phase by PID control gain instead of Kₐ. In addition, if the same control can be performed, it's not limited to sine function.

By the above control, a yawing moment generates, and the yaw angle of the nacelle 20 is changed. The change of the yaw angle of the nacelle 20 generates restorative force or damping force in the rolling direction. The change information in the rolling direction is sent to the roll acceleration sensor 26 again i.e. feed backed, and the control is repeated until the move ends.

In this embodiment, it is controlled so that the thrust generated on the blade in the direction to which the tower 10 leans becomes larger than the thrust generated on the blade in the opposite direction to which the tower 10 leans. Accordingly, the yaw angle of the nacelle 20 is changed and it becomes possible to generate the restorative force in the rolling direction, and that can reduce the shift from vertical position.

Incidentally, in this embodiment, the control is performed by adjusting the pitch motor which is provided with each blade and adjust the thrust, but it is not intended to limit this invention to the specific embodiment.

Also, in this embodiment, the azimuthal angle sensor 25 is provided which detects the position of each blade with respect to the tower 10, and the each blade's angles are changed by the pitch motor depending on the sine function in which each blade' s angles with respect to the tower are used as variables. So, depending on the azimuthal angle of each blade which changes from time to time, it becomes possible to change the pitch angle continuously or in a stepwise fashion and to control finely.

The controlling method in this embodiment is explained just as only the alternatives of the method in the first embodiment but both methods aim for changing the yaw angle of the nacelle 20 to the same direction, and it is possible to make use of both in combination.

Incidentally, although the up-wind type wind turbine is explained in this embodiment, the control is also applicable for a down-wind type wind turbine generating system. However, it is not necessary for the down-wind turbine system to change the control way according to wind direction as in the first embodiment, rather the same control can be used in this embodiment. That is, in case of down-wind turbine, if the same control is applied, then the yaw rotation of the nacelle is reversed compared with the case of up-wind turbine.

### Third embodiment

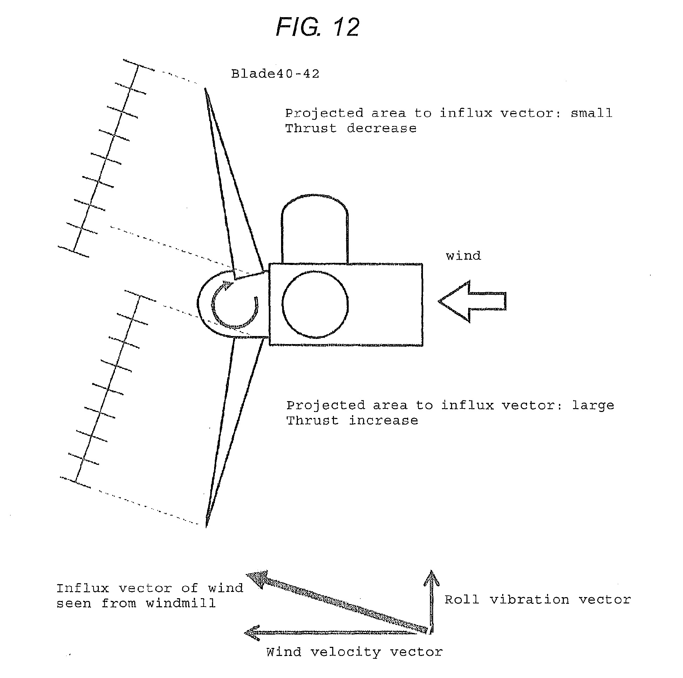

Using fig. 12, the third embodiment is explained. Although a plurality of blades 40-42 are disposed in a direction perpendicular to the nacelle in the embodiment 1 and 2, the blades 40-42 in this embodiment are leaned to leeward, i.e. the blades 40-42 have coning angles, and the hub 30 is used as vertex of the blades.

The fig. 12 especially corresponds to a down-wind type wind turbine generating system which generates electricity keeping the blades at leeward position with respect to the tower, and shows the condition which the wind turbine system shifts to right against wind direction. In this case, influx vector of wind seen from the wind turbine system becomes to the direction shown in fig. 12 by synthesizing roll vibration velocity vector of the wind turbine system and wind velocity vector. The projected area of each blade with respect to the influx vector changes depending on the azimuthal angle, therefore the thrust which depends on the position of the blade generates. As a result, the clockwise yawing moment shown in the fig. 12 generates. This yawing moment works as the same type of damping force shown in the embodiment 1, therefore, it is possible to reduce the shift as the above embodiments. Incidentally, although this embodiment only explains the case which the tower shifts to right against wind direction, even in case the tower shifts to left against wind direction, the yawing moment with the same direction as the embodiment 1 occurs, and it's also possible to reduce the shift.

In this embodiment, the blades 40-42 in this embodiment are leaned to leeward and also the hub 30 is used as vertex, therefore it is possible to reduce the shift. Also, this example in this embodiment aims for changing the yaw angle of the nacelle 20 to the same direction with the above embodiments, and different control methods are used. Therefore, it is also possible to combine the control in this embodiment with the above embodiments.

Incidentally, it is possible for both up-wind type wind turbine and down-wind type wind turbine that the blades are leaned to the leeward with respect to the hub 30 (as vertex), but as to the up-wind type wind turbine, there are some risk for the blades to approach the tower and to collide with each other when heavy wind blows. Meanwhile, as to the down-wind type wind turbine, the leaning of the blade moves farer from the tower when wind blows, therefore the risk doesn't exist, so it's favorable.

Incidentally, this invention is especially effective in case the wind turbine is established off-shore because leaning or swinging becomes harder. Above all when the wind turbine is established on floating body, then it can become more effective.

## Claims

1. A wind turbine system comprising:
a tower (10);
a nacelle (20) which is supported on the tower (10);
a plurality of blades (40-42) which are rotatably supported to the nacelle (20) via a hub (30); and
a generator (22) which generates electricity by rotating the blades (40-42),
wherein in case the tower (10) shifts from vertical direction, the wind turbine system is controlled so that a force with an opposite direction to the tower shifting direction is added by wind force.

2. A wind turbine system according to claim 1, wherein the wind turbine system is controlled so that thrust generated by wind force in a blade (40-42) which positions in the tower shifting direction becomes larger than thrust generated by wind force in another blade which positions an opposite direction to the tower shifting direction.

3. A wind turbine system according to claim 2, wherein further comprises a pitch angle adjusting device (43-45), and wherein in case the tower (10) shifts from vertical direction, the wind turbine system is controlled so that the thrust generated by wind force in the blade (40-42) which positions in the tower shifting direction becomes larger than thrust generated by wind force in the blade (40-42) which positions in the opposite direction to the tower shifting direction by said pitch angle adjusting device (43-45) adjusts thrust generated in each of the blades (40-42).

4. A wind turbine system according to claim 3, wherein a sensor which detects an angle of each blade (40-42) with respect to the tower, and wherein thrust generated by wind force in each blade (40-42) is changed depending on a position of each blade (40-42) determined from the angle detected by the sensor.

5. A wind turbine system according to at least one of claims 1 to 4, wherein each blade (40-42) is positioned to a leeside from the hub (30) when the wind turbine system generates electricity.

6. A wind turbine system according to at least one of claims 1 to 5, wherein the wind turbine system is a down-wind type wind turbine generating system which generates electricity keeping the blades (40-42) at leeward position with respect to the tower (10).

7. A wind turbine system according to at least one of claims 1 to 5, wherein the wind turbine system is a up-wind type wind turbine generating system which generates electricity keeping the blades (40-42) at windward position with respect to the tower (10), and wherein the nacelle (20) is controlled to make the blade (40-42) which positions at tower's shifted side move to leeward.

8. A wind turbine system according to claim 7, wherein further comprises a yaw adjusting device which adjusts an angle of the nacelle (20) with respect to wind direction, and wherein in case the tower (10) shifts from vertical direction, the nacelle (20) is controlled to make the blade (40-42) which positions at tower's shifted side move to leeward by being adjusted the angle of the nacelle (20) with respect to wind direction by said yaw adjusting device.

9. A wind turbine system according to at least one of claims 1 to 5, wherein the wind turbine system is a down-wind type wind turbine generating system which generates electricity keeping the blades (40-42) at leeward position with respect to the tower (10), and wherein the nacelle (20) is controlled to make the blade (40-42) which positions at tower's shifted side move to windward.

10. A wind turbine system according to claim 9, wherein further comprises a yaw adjusting device which adjusts an angle of the nacelle (20) with respect to wind direction, and wherein the nacelle (20) is controlled to make the blade (40-42) which positions at tower's shifted side move to windward in case the tower (10) shifts from vertical direction, by said yaw adjusting device adjusts the angle of the nacelle (20) with respect to wind direction.

11. A wind turbine system according to at least one of claims 1 to 10, wherein the wind turbine is established on floating body.
